(19) Europäisches Patentamt
European Patent Office
Office européen des brevets

(11) **EP 4 417 734 A1**

(12) **EUROPÄISCHE PATENTANMELDUNG**

(43) Veröffentlichungstag:
**21.08.2024 Patentblatt 2024/34**

(21) Anmeldenummer: **23156642.3**

(22) Anmeldetag: **14.02.2023**

(51) Internationale Patentklassifikation (IPC):
**C25B 1/04** *(2021.01)* **C25B 9/19** *(2021.01)*
**C25B 15/029** *(2021.01)* **C25B 15/08** *(2006.01)*

(52) Gemeinsame Patentklassifikation (CPC):
**C25B 15/087; C25B 1/04; C25B 9/19;
C25B 15/029; C25B 15/083**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **L'AIR LIQUIDE, SOCIETE ANONYME
POUR L'ETUDE ET
L'EXPLOITATION DES PROCEDES GEORGES
CLAUDE
75007 Paris (FR)**

(72) Erfinder:
• **Schild, Daniel
  60388 Frankfurt am Main (DE)**
• **Castillo-Welter, Frank
  60388 Frankfurt am Main (DE)**
• **Tadiello, Jean-Philippe
  60439 Frankfurt am Main (DE)**

(74) Vertreter: **Air Liquide
L'Air Liquide S.A.
Direction de la Propriété Intellectuelle
75, Quai d'Orsay
75321 Paris Cedex 07 (FR)**

(54) **VERFAHREN ZUR REGELUNG EINES ELEKTROLYSEURS**

(57) Die Erfindung betrifft ein Verfahren zur Regelung eines Elektrolyseurs. Durch das ermitteln von vier verschiedenen Elektrolytflussraten an bestimmten Positionen des Elektrolyseurs lässt sich eine Ausgleichsflussrate innerhalb eines Ausgleichssystems bestimmen, welches eine Fluidverbindung zwischen der Anoden- und Kathodenseite des Elektrolyseurs herstellt. Über das Ausgleichssystem lässt sich zumindest ein teilweiser Konzentrationsausgleich zwischen der Elektrolytkonzentration auf der Anodenseite und der Elektrolytkonzentration auf der Kathodenseite erreichen. Die Ausgleichs-flussrate ermöglicht Rückschlüsse auf den Betriebszustand des Elektrolyseurs. Ferner kann auf Basis der Ausgleichsflussrate eine Permeationsflussrate zwischen dem Anoden- und Kathodenraum einer oder mehrere Elektrolysezellen bestimmt werden. Die Permeationsflussrate steht in Zusammenhang mit einem vorgegebenen Differenzdruck zwischen dem Anoden- und Kathodenraum, welcher die Effizienz des Elektrolyseurs verbessert. Die Permeationsflussrate ermöglicht weitere Rückschlüsse auf den Betriebszustand des Elektrolyseurs.

Fig. 1

EP 4 417 734 A1

**Beschreibung**

**Technisches Gebiet der Erfindung**

Die Erfindung betrifft ein Verfahren zur Regelung eines Elektrolyseurs, insbesondere zur Regelung eines alkalischen Elektrolyseurs für die Herstellung von Wasserstoff.

**Stand der Technik**

Die elektrolytische Spaltung von Wasser zur Herstellung von Wasserstoff gewinnt in der heutigen vom Menschen verursachten Klimawandel geprägten Zeit zunehmend an Bedeutung. Für die Herstellung von elektrolytisch erzeugtem Wasserstoff im großtechnischen Maßstab sind dabei insbesondere zwei Verfahren von herausragender Bedeutung, nämlich die Protonen-Austausch-Membran (PEM) Elektrolyse und die alkalische Elektrolyse.

Bei der alkalischen Elektrolyse laufen kathodenseitig und anodenseitig die folgenden Halbzellenreaktion ab:

Kathodenseite: $2\ H_2O + 2e^- \rightarrow H_2 + 2\ OH^-$

Anodenseite: $2\ OH^- \rightarrow \frac{1}{2}\ O_2 + 2e^- + H_2O$

Netto wird somit aus einem mol Wasser ein halbes mol molekularer Sauerstoff und ein mol molekularer Wasserstoff gebildet. Damit die Reaktionen in den Elektrolysehalbzellen ablaufen können, müssen Hydroxylionen durch ein ionendurchlässiges Trennelement diffundieren, welches die Kathodenseite und die Anodenseite der Elektrolysezelle voneinander separiert. Ein solches Trennelement wird insbesondere bei der alkalischen Elektrolyse als Diaphragma bezeichnet.

Ein Elektrolyseur im großtechnischen Maßstab weist eine Vielzahl von Elektrolysezellen auf, wobei die einzelnen Zellen stapelartig übereinanderliegend angeordnet sind und in einem Rahmen zusammengefasst sind. Aus diesem Grund ist in diesem Zusammenhang üblicherweise von einem Elektrolysezellenstapel, oder vereinfacht Zellenstapel, die Rede.

Wie an den oben dargestellten Halbzellenreaktionen zu erkennen, wird auf der Kathodenseite Wasser verbraucht, während auf der Anodenseite Wasser gebildet wird. Bei der alkalischen Elektrolyse kommt als Elektrolysemedium (Elektrolyt) vorzugsweise eine hochkonzentrierte Kaliumhydroxid-Lösung (wässrige KOH oder $KOH_{aq}$) zum Einsatz. Aufgrund der Natur der ablaufenden Halbzellenreaktionen findet auf der Kathodenseite durch Verbrauch von Wasser eine Konzentrierung des Elektrolysemediums statt, während auf der Anodenseite durch Bildung von Wasser eine Verdünnung des Elektrolysemediums stattfindet.

Unter anderem aus diesem Grund werden alkalische Elektrolyseure regelmäßig im sogenannten Kreuzstrommodus betrieben. In diesem Modus werden das kathodenseitige Elektrolysemedium (Katholyt) und das anodenseitige Elektrolysemedium (Anolyt), nach der Abtrennung der Produktgase (Wasserstoff und Sauerstoff) in entsprechenden Gas-Flüssigkeits-Abscheidern, miteinander gemischt und anschließend wieder in zwei Teilströme getrennt und den jeweiligen Seiten (Kathodenraum und Anodenraum) des Elektrolysezellenstapels zugeführt. Durch das Mischen wird ein Konzentrationsausgleich zwischen dem Anolyten und dem Katholyten herbeigeführt.

Alkalische Elektrolyseure werden nicht zwangsläufig permanent unter Volllast gefahren, sondern müssen zeitweise auch mit einer niedrigeren Stromlast, also unter Teillast, betrieben werden. Dies kann verstärkt bei der Verwendung von regenerativen Energiequellen erforderlich sein, wenn aufgrund einer Windflaute oder ausbleibender Sonneneinstrahlung weniger regenerativ erzeugter Strom zur Verfügung steht. Unter Teillast-Bedingungen wird pro Zeiteinheit eine geringere Gasmenge produziert als bei voller Auslastung des Elektrolyseurs. Entsprechend führt eine gleichgroße Diffusionsmenge von Wasserstoff auf die Anodenseite ("Hydrogen to Oxygen - HTO), und umgekehrt von Sauerstoff auf die Kathodenseite, unter Teillast zu einer erheblich größeren Kontamination der produzierten Gasmenge. Dies kann dazu führen, dass aufgrund der Kumulation von Wasserstoff auf der Sauerstoffseite und umgekehrt die untere Explosionsgrenze für den Ablauf der Knallgasreaktion überschritten wird, und somit ein explosionsfähiges Gemisch gebildet wird. Dies ist für einen sicheren Betrieb des Elektrolyseurs in jedem Fall zu vermeiden.

Aus diesem Grund werden alkalische Elektrolyseure bei niedrigen Stromlasten vorzugsweise im sogenannten Parallelstrommodus betrieben, in welchem die vorbeschriebene Vermischung von Anolyt und Katholyt nicht erfolgt. Ein reiner Parallelstrombetrieb führt jedoch aufgrund der Natur der Halbzellenreaktionen über die Zeit zu einer steten Veränderung der Konzentration des Elektrolyten auf der Kathodenseite und auf der Anodenseite. Daher ist auch im Parallelstrommodus ein zumindest teilweises Vermischen des anodenseitigen und des kathodenseitigen Elektrolysemediums erforderlich oder zumindest vorteilhaft. Auf diese Weise kann der steten Konzentrationsänderung über die Zeit zumindest teilweise entgegen gewirkt werden, bis wieder zum Kreuzstrommodus unter Volllast zurückgekehrt werden kann. Um diesen Zweck zu erfüllen, kann der Elektrolyseur über ein entsprechendes Ausgleichssystem verfügen, durch welches der erforderliche zumindest teilweise Konzentrationsausgleich durch teilweises Mischen von Anolyt und Katholyt herbeigeführt werden kann.

Bei heute verwendeten alkalischen Elektrolyseuren ist die in einer Elektrolysezelle wirkende Stromdichte (in A/cm$^2$) relativ niedrig im Vergleich zu PEM-Zellen. Allerdings befinden sich bereits Zellen in Entwicklung, welche höhere Stromdichten ermöglichen.

Um die höchstmögliche Effizienz einer solchen modernen alkalischen Elektrolysezelle zu erreichen, ist es erforderlich, eine möglichst genau definierte Druckdifferenz zwischen der Kathodenseite und der Anodenseite der Elektrolysezelle bzw. zwischen den jeweiligen Kathodenräumen und dem Anodenräumen der Elektrolysezellen einzustellen. Je höher diese Druckdifferenz, desto höher die treibende Kraft für die Permeation der Hydroxylionen durch das Trennelement (Diaphragma) der Zelle. Andere treibende Kräfte für die Permeation der Hydroxylionen sind der Potentialunterschied zwischen Kathode und Anode, sowie Konzentrationsunterschiede in den Elektrolytlösungen.

Mit steigender Druckdifferenz zwischen Kathoden- und Anodenraum eines Elektrolyseurs steigt somit die Effizienz der Elektrolysereaktion, da die Hydroxylionen nicht nur diffusionsgetrieben, sondern auch konvektionsgetrieben durch das jeweilige Trennelement transportiert werden. Andererseits darf die Druckbelastung auf das Diaphragma nicht zu hoch sein, damit dieses nicht beschädigt wird. Es ist somit erforderlich, eine möglichst hohe Druckdifferenz zwischen Anoden- und Kathodenraum einzustellen, gleichzeitig muss dieser Differenzdruckwert jedoch auch in einem sehr engen Bereich möglichst genau geregelt werden, um einen zulässigen Maximalwert nicht zu überschreiten.

Ein allgemeiner Nachteil eines alkalischen Elektrolyseurs ist die unbekannte Permeationsflussrate (auch Permeationsstrom) durch das Diaphragma, deren Kenntnis in vielerlei Hinsicht nützlich wäre. Diese hängt von zahlreichen Prozessbedingungen der Elektrolyse ab, insbesondere jedoch von der Druckdifferenz zwischen dem Kathodenraum und dem Anodenraum des Zellenstapels. Der Permeationsstrom kann einerseits dazu beitragen, Konzentrationsunterschiede zwischen der Anoden- und der Kathodenseite auszugleichen. Andererseits trägt der Permeationsstrom auch dazu bei, gelöste Gase durch das Diaphragma hindurch zu transportieren, was zu den oben genannten Problemen führt. Es ist daher erforderlich, den Permeationsstrom durch das Diaphragma in einem kontrollierten und begrenzten Bereich zu halten.

Da der Permeationsstrom in einem begrenzten Bereich gehalten werden sollte und schwierig zu kontrollieren ist, eignet sich dieser nicht als Leitgröße für das Herstellen eines Konzentrationsausgleichs zwischen der Anoden- und Kathodenseite des Elektrolysemediums. Es ist daher bevorzugt, den erforderlichen Konzentrationsausgleich über ein Ausgleichssystem zu realisieren, welches stromabwärts der Gas-Flüssigkeits-Abscheider und stromaufwärts des Zellenstapels angeordnet ist und einen Ausgleichsstrom (auch Ausgleichsflussrate) von der Anodenseite des Elektrolysemediums auf die Kathodenseite ermöglicht, oder umgekehrt einen Ausgleichsstrom von der Kathodenseite auf die Anodenseite ermöglicht. Dabei ist es wichtig, die Ausgleichsflussrate möglichst genau zu kennen, da diese in Zusammenhang mit der Permeationsflussrate steht.

## Beschreibung der Erfindung

Die Permeationsflussrate kann nicht direkt, beispielsweise mit Hilfe eines Durchflussmessers, ermittelt werden. Für die Bestimmung der Ausgleichsflussrate sind zusätzliche Durchflussmesser erforderlich, wodurch die technische Komplexität der Elektrolyseanlage erhöht wird. Zusätzliche Instrumentierung ist insbesondere bei alkalischen Elektrolyseuren unerwünscht, da das korrosive Elektrolysemedium besonders widerstandsfähige Materialien, wie beispielsweise Rohrleitungen und Komponenten aus Nickel basierten Legierungen, erfordert. Zusätzliche Durchflussmesser führen weiterhin zu zusätzlichen Druckverlusten, und insbesondere innerhalb des Ausgleichssystems angeordnet zu unerwünschten Druckschwankungen zwischen dem Anoden- und Kathodenraum des Zellenstapels. Andererseits ist es trotzdem wünschenswert, die Ausgleichsflussrate und die Permeationsflussrate möglichst genau zu kennen, um daraus Rückschlüsse über das Prozessverhalten zu erhalten. Dadurch kann die Regelbarkeit der Elektrolyseanlage, insbesondere in Bezug auf die Druckdifferenz zwischen Anoden- und Kathodenraum, und die daraus resultierende mögliche Effizienzoptimierung und potentiell problematische Belastung des Diaphragmas, verbessert werden.

Eine Aufgabe der vorliegenden Erfindung besteht daher darin, die Nachteile des Standes der Technik zumindest teilweise zu überwinden.

Eine weitere Aufgabe der vorliegenden Erfindung besteht darin, ein Verfahren bereitzustellen, welches die Ermittlung der Ausgleichsflussrate und ferner bevorzugt der Permeationsflussrate ohne zusätzliche erforderliche Instrumentierung ermöglicht.

Insbesondere besteht eine Aufgabe der vorliegenden Erfindung darin, ein Verfahren bereitzustellen, welches die Ermittlung der Ausgleichsflussrate und ferner bevorzugt der Permeationsflussrate ohne zusätzliche Durchflussmesser ermöglicht.

Ein Beitrag zur mindestens teilweisen Erfüllung mindestens einer der obigen Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen. Bevorzugte Ausgestaltungen von Bestandteilen einer erfindungsgemäßen Kategorie sind, soweit zutreffend, ebenso bevorzugt für gleichnamige oder entsprechende Bestandteile einer jeweils anderen erfindungsgemäßen Kategorie.

Die Ausdrücke "aufweisend", "umfassend" oder "beinhaltend" etc. schließen nicht aus, dass weitere Elemente, Inhaltsstoffe etc. enthalten sein können. Der unbestimmte Artikel "ein" schließt nicht aus, dass eine Mehrzahl vorhanden sein kann.

Gemäß einem Aspekt der vorliegenden Erfindung wird ein Verfahren zur Regelung eines Elektrolyseurs vorgeschlagen, insbesondere zur Regelung eines alkalischen Elektrolyseurs für die Herstellung von Wasserstoff, wobei der Elektrolyseur mit einem Elektrolyten mit einer Elektrolytkonzentration betrieben wird, wobei der Elektrolyseur einen Elektrolysezellenstapel mit einem Anodenraum und einem Kathodenraum umfasst, und

einen anodenseitigen und einen kathodenseitigen Gas-Flüssigkeit-Abscheider umfasst, wobei
der Anodenraum und der anodenseitige Gas-Flüssigkeit-Abscheider über einen ersten Strömungsweg fluidisch miteinander verbunden sind, und der Kathodenraum und der kathodenseitige Gas-Flüssigkeit-Abscheider über einen zweiten Strömungsweg fluidisch miteinander verbunden sind, und der Elektrolyseur stromabwärts der Gas-Flüssigkeit-Abscheider und stromaufwärts des Elektrolysezellenstapels ein Ausgleichssystem aufweist, welches eine fluidische Verbindung zwischen dem ersten und dem zweiten Strömungsweg herstellt und so konfiguriert ist, dass ein zumindest teilweiser Konzentrationsausgleich zwischen einer Elektrolytkonzentration im ersten Strömungsweg und einer Elektrolytkonzentration im zweiten Strömungsweg erzielbar ist, und wobei das Verfahren die folgenden Verfahrensschritte aufweist:

a) Einstellen eines Differenzdrucks $\Delta p$ zwischen dem Anodenraum und dem Kathodenraum;
b) Ermitteln

i. einer ersten Elektrolytflussrate $EF1$ innerhalb des ersten Strömungswegs und stromaufwärts des Ausgleichssystems,
ii. einer zweiten Elektrolytflussrate $EF2$ innerhalb des zweiten Strömungswegs und stromaufwärts des Ausgleichssystems,
iii. einer dritten Elektrolytflussrate $EF3$ innerhalb des ersten Strömungswegs und stromabwärts des Ausgleichssystems, und
iv. einer vierten Elektrolytflussrate $EF4$ innerhalb des zweiten Strömungswegs und stromabwärts des Ausgleichssystems;

c) Bestimmen einer Ausgleichsflussrate $CF$ aus den vorgenannten Elektrolytflussraten, wobei die Ausgleichflussrate $CF$ der Nettoflussrate über das Ausgleichssystem zwischen dem ersten Strömungsweg und dem zweiten Strömungsweg entspricht.

Das erfindungsgemäße Verfahren eignet sich zur Regelung, insbesondere zur Verbesserung der Regelung eines Elektrolyseurs. Bei dem Elektrolyseur kann es sich um jede Art von Elektrolyseur handeln, welcher mit einem Elektrolysemedium betrieben wird, welches eine messbare Konzentration eines Elektrolyten aufweist. Bei dem Elektrolyten handelt es sich insbesondere um eine flüssige Lösung von Ionen, insbesondere mit Wasser als Lösungsmittel. Der Ausdruck "Elektrolytkonzentration" bezieht sich dann auf die Konzentration der gelösten Substanz oder der gelösten Ionen. Bei dem Elektrolyten kann es sich daher beispielsweise um eine wässrige Lösung eines Salzes, einer Säure, einer Base, oder Kombinationen daraus handeln. Der "Elektrolyt" kann auch als "Elektrolysemedium" bezeichnet werden.

Vorzugsweise wird der Elektrolyseur als alkalischer Elektrolyseur betrieben. Vorzugsweise ist der Elektrolyt eine wässrige Lösung einer Base, vorzugsweise eine wässrige Lösung eines Alkalimetallhydroxids in Wasser, beispielsweise eine wässrige Lösung von Natriumhydroxid, vorzugsweise eine wässrige Lösung von Kaliumhydroxid. Die Konzentration des Alkalimetallhydroxids in dieser Lösung kann bis zu 40 Gew.-% betragen. Bei der durch den Elektrolyseur durchgeführten Elektrolyse handelt es sich vorzugsweise um eine Wasserelektrolyse zur Herstellung von Wasserstoff als primäres Zielprodukt, und zur Herstellung von Sauerstoff als weiteres Produkt.

Der Elektrolyseur weist eine Vielzahl von Elektrolysezellen auf, welche als Elektrolysezellenstapel, auch Zellenstapel, angeordnet sind. Jede der Elektrolysezellen verfügt über eine Anodenseite und eine Kathodenseite, wobei diese Seiten über ein Trennelement voneinander separiert sind. Bei dem Trennelement kann es sich um eine Membran oder ein Diaphragma handeln. Das Trennelement ist für die Permeation von Ionen durchlässig, bei einem alkalischen Elektrolyseur insbesondere für die Permeation von Hydroxylionen durchlässig. Die Gesamtheit der Kathodenseiten der Elektrolysezellen des Zellenstapels bildet den Kathodenraum, die Gesamtheit der Anodenseiten der Elektrolysezellen des Zellenstapels bildet den Anodenraum.

Dem Elektrolysezellenstapel wird Gleichstrom aus einer Gleichstromquelle, wie zum Beispiel einem Gleichrichter, zugeführt. Durch die Zuführung von Gleichstrom zum Elektrolysezellenstapel findet im Anodenraum eine Produktbildung durch eine elektrochemische Oxidation statt, im Kathodenraum eine Produktbildung durch eine elektrochemische Reduktion. Bei dem Produkt handelt es sich vorzugsweise um ein gasförmiges Produkt. Die Produktbildung erfolgt durch elektrochemische Reaktion eines Edukts aus dem Elektrolyten. Vorzugsweise wird aus dem Elektrolyten Wasserstoff im Kathodenraum und Sauerstoff im Anodenraum gebildet. Besonders bevorzugt wird aus einer konzentrierten wässrigen Kaliumhydroxidlösung Wasserstoff im Kathodenraum und Sauerstoff im Anodenraum gebildet.

Die Abtrennung eines gasförmigen Produkts erfolgt anodenseitig im anodenseitigen Gas-Flüssigkeit-Abscheider, vorzugsweise erfolgt eine Abtrennung von Sauerstoff im anodenseitigen Gas-Flüssigkeit-Abscheider. Der Gas-Flüssigkeit-Abscheider ist dafür fluidisch über einen ersten Strömungsweg, beispielsweise über eine Leitung, mit der Anodenseite des Elektrolysezellenstapels verbunden.

Die Abtrennung eines weiteren gasförmigen Produkts erfolgt kathodenseitig im kathodenseitigen Gas-Flüssigkeit-Abscheider, vorzugsweise erfolgt eine Abtrennung von Wasserstoff im kathodenseitigen Gas-Flüssigkeit-Abscheider. Der Gas-Flüssigkeit-Abscheider ist dafür fluidisch über einen zweiten Strömungsweg, beispielsweise über eine Leitung, mit der Kathodenseite des Elektrolysezellenstapels verbunden.

Im Elektrolysezellenstapel auf der Anodenseite erzeugtes zweiphasiges Gemisch wird als zweiphasiger Anolyt von der Anodenseite des Elektrolysezellenstapels abgezogen und strömt nachfolgend zum anodenseitigen Gas-Flüssigkeit-Abscheider. Dort erfolgt die Abtrennung des gasförmigen anodenseitig erzeugten Produkts. Das gasförmige Produkt wird vorzugsweise einer weiteren Aufarbeitung unterzogen. Der weitgehend von gasförmigem Produkt befreite Anolyt wird nachfolgend über den ersten Strömungsweg, beispielsweise eine Leitung, zur Anodenseite des Elektrolysezellenstapels geführt. Im Anodenraum des Elektrolysezellenstapels erfolgt eine erneute Bildung von gasförmigem Produkt, insbesondere von Sauerstoff, aus dem Anolyten. Der erste Strömungsweg ist somit zum Leiten von an Produktgas verarmtem Anolyten vom anodenseitigen Gas-Flüssigkeit-Abscheider hin zum Anodenraum des Elektrolysezellenstapels konfiguriert.

Im Elektrolysezellenstapel auf der Kathodenseite erzeugtes zweiphasiges Gemisch wird als zweiphasiger Katholyt von der Kathodenseite des Elektrolysezellenstapels abgezogen und strömt nachfolgend zum kathodenseitigen Gas-Flüssigkeit-Abscheider. Dort erfolgt die Abtrennung des gasförmigen kathodenseitig erzeugten Produkts. Das gasförmige Produkt wird optional einer weiteren Aufarbeitung unterzogen. Der weitgehend von gasförmigem Produkt befreite Katholyt wird nachfolgend über den zweiten Strömungsweg, beispielsweise eine Leitung, zur Kathodenseite des Elektrolysezellenstapels geführt. Im Kathodenraum des Elektrolysezellenstapels erfolgt eine erneute Bildung von gasförmigem Produkt, insbesondere von Wasserstoff, aus dem Katholyten. Der zweite Strömungsweg ist somit zum Leiten von an Produktgas verarmtem Katholyten vom kathodenseitigen Gas-Flüssigkeit-Abscheider hin zum Kathodenraum des Elektrolysezellenstapels konfiguriert.

Das erfindungsgemäße Verfahren bezieht sich auf einen Elektrolyseur, welcher ein Ausgleichssystem umfasst, welches so konfiguriert ist, dass ein zumindest teilweiser Konzentrationsausgleich zwischen einer Elektrolytkonzentration im ersten Strömungsweg und einer Elektrolytkonzentration im zweiten Strömungsweg erzielbar ist. Um einen Konzentrationsausgleich zwischen anodenseitiger und kathodenseitiger Elektrolytkonzentration erzielen zu können, weist das Ausgleichsystem eine fluidische Verbindung zwischen dem ersten Strömungsweg und dem zweiten Strömungsweg auf, was beispielsweise über eine oder mehrere Leitungen realisiert werden kann. Ist der Elektrolyseur beispielsweise ein alkalischer Elektrolyseur und wird dieser Elektrolyseur im Parallelstrommodus betrieben, dann findet auf der Kathodenseite durch Wasserverbrauch eine Konzentrierung des Elektrolyten statt und auf der Anodenseite durch Bildung von Wasser eine Verdünnung des Elektrolyten. Zur Herstellung eines zumindest teilweisen Konzentrationsausgleichs könnte dann über das Ausgleichssystem Elektrolyt vom ersten Strömungsweg auf der Anodenseite zum zweiten Strömungsweg auf der Kathodenseite fließen, oder umgekehrt.

Daraus ergibt sich eine Ausgleichsflussrate CF, welche der Nettoflussrate über das Ausgleichssystem entspricht. Die Nettoflussrate entspricht bei einer einzigen Flussrate, wenn beispielsweise nur eine Leitung zwischen erstem und zweitem Strömungsweg vorhanden ist, der Flussrate zwischen dem ersten und dem zweiten Strömungsweg.

Die Nettoflussrate kann auch der Summe mehrerer Flussraten entsprechen, welche alle in gleicher Flussrichtung (nur von der Anodenseite auf die Kathodenseite oder nur von der Kathodenseite auf die Anodenseite) oder in entgegengesetzten Richtungen (von der Anodenseite auf die Kathodenseite und von der Kathodenseite auf die Anodenseite) über das Ausgleichssystem fließen können. Bei entgegengesetzten Flussrichtungen mehrerer Flussraten werden Flussraten einer Richtung mit einem positiven Vorzeichen, und die Flussrate(n) der entgegen gesetzten Richtung(en) mit negativem(n) Vorzeichen versehen. Beträgt beispielsweise eine Flussrate von der Kathodenseite auf die Anodenseite 100 kg/h, und eine Flussrate von der Anodenseite auf die Kathodenseite 25 kg/h, ist die Nettoflussrate (100-25) kg/h, also 75 kg/h.

Die Ausgleichsflussrate CF kann, abhängig von den Werten der Elektrolytflussraten EF1 bis EF4, auch ein negatives Vorzeichen annehmen.

Die Ausgleichsflussrate CF kann auch für den Fall bestimmt werden, dass eine vollständige Mischung des Anolyten und Katholyten im Kreuzstrommodus erfolgt. Die Ausgleichsflussrate entspricht dann beispielsweise der Differenz der Elektrolytflussraten auf der Anodenseite und Kathodenseite stromaufwärts zu der jeweiligen Mischvorrichtung, wenn die Elektrolytflussraten stromabwärts der Mischvorrichtung anodenseitig und kathodenseitig gleich sind. Die Differenz der Elektrolytflussraten stromaufwärts zur Mischvorrichtung ist dann die Nettoflussrate.

Es wurde gefunden, dass die Ausgleichsflussrate aus der Messung der vier Elektrolytflussraten EF1, EF2, EF3 und EF4 ermittelt werden kann. Dabei werden die Elektrolytflussraten EF1 und EF2 stromaufwärts zum Ausgleichssystem, im ersten (EF1) beziehungsweise zweiten (EF2) Strömungsweg ermittelt. Die Elektrolytflussraten EF3 und EF4 werden stromabwärts zum Ausgleichssystem, im ersten (EF3) beziehungsweise zweiten (EF4) Strömungsweg ermittelt.

"Stromaufwärts zum Ausgleichssystem" bedeutet dabei insbesondere stromaufwärts zum Ausgleichssystem und stromabwärts zum Gas-Flüssigkeit-Abscheider. "Stromabwärts zum Ausgleichssystem" bedeutet dabei insbesondere stromabwärts zum Ausgleichssystem und stromaufwärts zum Elektrolysezellenstapel.

Durch die Ermittlung der Elektrolytflussraten EF1 bis EF4 an den definierten Positionen und die daraus ableitbare Ausgleichflussrate kann eine Ermittlung der Ausgleichsflussrate mittels dafür dedizierter Durchflussmesser, beispielsweise in einer den ersten und zweiten Strömungsweg verbindenden Leitung, entfallen.

Flussraten können beispielsweise als Volumenstrom (Volumen pro Zeiteinheit), Massenstrom (Masse pro Zeiteinheit) oder Stoffmengenstrom (Stoffmenge, z.B. kmol, pro Zeiteinheit) ermittelt werden. Flussraten können technisch beispielsweise mit einem Durchflussmesser ermittelt werden.

Zwischen dem Anodenraum und dem Kathodenraum wird ein Differenzdruck $\Delta p$ eingestellt, um die Effizienz des Elektrolyseurs über diesen Schritt des Regelungsverfahrens zu verbessern. Durch die Einstellung eines Differenzdrucks $\Delta p$ wird der Transport von Ionen durch die Trennelemente der Elektrolysezellen verbessert. Gemäß einem Beispiel liegt der Differenzdruck in einem Bereich von 2 bis 100 mbar, vorzugsweise in einem Bereich von 5 bis 75 mbar, weiter bevorzugt in einem Bereich von 10 bis 60 mbar.

Weiterhin wurde festgestellt, dass gilt

$CF = EF3 - EF1$, sowie
$CF = EF2 - EF4$.

Das bedeutet, die Ausgleichsflussrate CF ist durch Differenzbildung aus drittem und erstem Elektrolytstrom und/oder durch Differenzbildung aus zweitem und viertem Elektrolytstrom ermittelbar.

Eine bevorzugte Ausführungsform des erfindungsgemäßen Verfahrens ist dadurch gekennzeichnet, dass das Verfahren die weiteren Verfahrensschritte aufweist:

d) Ermitteln einer Zuflussrate FF, wobei die Zuflussrate FF der Menge an dem Elektrolyseur zugeführten Wasser pro Zeiteinheit entspricht, welches durch eine Wasserstoff- und Sauerstoff-Bildungsreaktion pro Zeiteinheit verbraucht wird;

e) Bestimmen einer Permeationsflussrate PF aus der Zuflussrate FF und der Ausgleichflussrate CF, wobei die Permeationsflussrate PF der Flussrate durch alle zwischen dem Kathodenraum und dem Anodenraum angeordnete Trennelemente entspricht.

Der Elektrolyseur wird vorzugsweise zur Durchführung einer Wasserelektrolyse zur Herstellung von Wasserstoff und Sauerstoff verwendet. Die für die elektrolytische Bildung von Wasserstoff und Sauerstoff verbrauchte Wassermenge muss dabei kontinuierlich ersetzt werden. Gemäß einer Ausführungsform wird dem Elektrolyseur daher im laufenden Betrieb permanent Wasser mit einer Zuflussrate FF zugeführt. Das Wasser wird beispielsweise über einen Wassertank zugeführt, vorzugsweise über einen der Gas-Flüssigkeit-Abscheider zugeführt. Die zum Ersetzen des verbrauchten Wassers erforderliche Zuflussrate FF kann beispielsweise indirekt über die am Elektrolysezellenstapel angelegte Stromlast bestimmt werden.

Die Permeationsflussrate PF entspricht der Flussrate durch alle zwischen dem Kathodenraum und dem Anodenraum angeordnete Trennelemente. Mit anderen Worten, die Permeationsflussrate PF entspricht der Flussrate im Elektrolysezellenstapel von der Kathodenseite auf die Anodenseite, durch die entsprechenden Trennelemente der Elektrolysezellen hindurch, oder der Flussrate im Elektrolysezellenstapel von der Anodenseite auf die Kathodenseite, durch die entsprechenden Trennelemente der Elektrolysezellen hindurch. Die Richtung des Permeationsflusses wird dabei durch den Differenzdruck $\Delta p$ zwischen Anodenraum und Kathodenraum bestimmt, je nachdem, ob der Absolutdruck im Kathodenraum oder im Anodenraum höher ist. Auf die Ebene einer Einzelzelle heruntergebrochen kann sich die Permeationsflussrate von Zelle zu Zelle leicht unterscheiden. Auch wenn diese einzelnen Teilpermeationsflussraten nicht zuverlässig bestimmt werden können, kann davon ausgegangen werden, dass der arithmetische Mittelwert dieser Teilpermeationsflussraten, multipliziert mit der Anzahl der Zellen, der Permeationsflussrate PF entspricht.

Es wurde gefunden, dass eine Permeationsflussrate PF aus der ermittelten Zuflussrate FF und der aus den Elektrolytflussraten EF1 bis EF4 ermittelten Ausgleichsflussrate CF bestimmt werden kann. Dafür wird insbesondere die Erkenntnis genutzt, dass die Zuflussrate FF der Menge an Wasser entspricht, welche im Falle einer alkalischen Elektrolyse der Menge an Wasser entspricht, die gemäß der anodischen Halbzellenreaktion

$$2\ OH^- \rightarrow \tfrac{1}{2}\ O_2 + 2e^- + H_2O$$

an der Anode gebildet wird.

Die Summe dieser "anodischen Flussrate" entspricht der Zuflussrate FF, wenn davon ausgegangen wird, dass keine oder nur geringfügige Wasserverluste mit dem Austrag der gasförmigen Produkte aus dem Elektrolyseur auftreten, was in der Praxis durch entsprechende Maßnahmen, beispielsweise Kondensation und Rückführung von Prozesswasser, der Fall ist.

Entsprechend wurde gefunden dass gilt, wenn die Zuflussrate FF mit der "anodischen Flussrate" gleichgesetzt wird,

$$PF = CF + FF.$$

Dadurch kann die Permeationsflussrate in besonders einfacher Weise bestimmt werden, wenn die Ausgleichsflussrate CF aufgrund der ermittelten Elektrolytflussraten EF1 bis EF4 bekannt ist.

Die Permeationsflussrate kann durch eine entsprechende Instrumentierung nur sehr schwierig und ungenau, wenn überhaupt, bestimmt werden. Das Ermitteln und die Kenntnis der Permeationsflussrate mit Hilfe der Ausgleichsflussrate CF und der Zuflussrate FF stellt eine Möglichkeit der signifikanten Verbesserung der Regelung des Elektrolyseurs dar.

Das Bestimmen der Ausgleichsflussrate CF und der Permeationsflussrate PF aus den vorgenannten Elektrolytflussraten EF1 bis EF4 und der Zuflussrate FF weist folgende Vorteile für die Regelung eines Elektrolyseurs auf.

Die ermittelte Ausgleichsflussrate CF kann als Indikator für eine Vielzahl sicherheitstechnisch problematischer Szenarien verwendet werden, bei denen ein gefährliches explosionsfähiges Gemisch aus Wasserstoff und Sauerstoff insbesondere in einem der Gas-Flüssigkeit-Abscheider entsteht. Ein solches Szenario kann z.B. durch einen Ausfall einer der Elektrolytpumpen im ersten oder zweiten Strömungsweg oder deren Regelkreise, oder durch eine Fehlfunktion oder falsche Einstellung eines Absperrventils im Ausgleichssystem ausgelöst werden. Die Ausgleichsflussrate CF würde sich in einem solchen Fall so ändern, dass diese Änderung als Indikator für eine Fehlfunktion gewertet werden kann.

Die Bestimmung der Permeationsflussrate PF auf Basis der Ausgleichflussrate CF und der Zuflussrate FF weist für die Regelung des Elektrolyseurs folgende Vorteile auf.

Die Permeationsflussrate PF kann als charakteristische Betriebsgröße für den Elektrolysezellenstapel genutzt werden, da eine Korrelation zwischen der Permeationsflussrate und dem Differenzdruck zwischen Kathoden- und Anodenraum besteht. Auch kann das Wissen über die Permeationsflussrate für die Auslegung des Trennelements zwischen Anoden- und Kathodenraum genutzt werden.

Ferner ist die Permeationsflussrate PF nützlich zur Verbesserung des Anlagenwirkungsgrades (Effizienz) durch Anpassung der Prozessparameter in Abhängigkeit von der Permeation durch das Trennelement zwischen Anoden- und Kathodenraum. Dies ist insbesondere zutreffend für Elektrolyseure mit integrierter Steuerlogik für den Differenzdruck $\Delta p$ zwischen dem Anodenraum und dem Kathodenraum.

Weiterhin eignet sich die Bestimmung der Permeationsflussrate PF zur Verbesserung der Bedienbarkeit der betreffenden Anlage. Dies liegt darin begründet, dass das Verständnis des aktuellen Anlagenzustandes signifikant verbessert wird, wenn alle für den Elektrolyten relevanten Flüssigkeitsströme bekannt sind.

Ferner ist das Wissen über die Permeationsflussrate PF für den langfristigen Betrieb des Elektrolyseurs ein für die Anlagensicherheit relevanter Wert, da eine driftende Permeationsflussrate PF ein frühes Anzeichen für Alterung und schließlich das Versagen eines Trennelements (beispielsweise Diaphragma oder Membran) zwischen einem Anoden- und Kathodenraum ist. Auch in Bezug auf kürzere Zeiträume ist die Permeationsflussrate ein sicherheitsrelevanter Wert, denn eine Permeationsflussrate PF welche höher ist als erwartet, kann ein Anzeichen für ein Versagen eines Trennelements sein. Dabei gibt es verschiedene Ursachen für ein solches Versagen, wie beispielsweise ein Bruch oder Riss aufgrund einer mechanischen Beschädigung, oder ein Ausfall der Differenzdruckregelung zwischen Anoden- und Kathodenraum, sofern eine solche integriert ist.

Eine Ausführungsform des erfindungsgemäßen Verfahrens ist dadurch gekennzeichnet, dass die dritte Elektrolytflussrate EF3 und die vierte Elektrolytflussrate EF4 eingestellt werden, so dass gilt

$$EF3 = EF4.$$

Mit anderen Worten, die Elektrolytflussraten innerhalb des ersten und zweiten Strömungswegs stromabwärts des Ausgleichssystems werden gemäß dieser Ausführungsform so eingestellt, dass diese gleich hoch sind. "Gleich hoch" bedeutet dabei insbesondere, dass deren Sollwert innerhalb einer definierten Fehlertoleranz gleich hoch ist, vorzugsweise auch deren Istwert innerhalb einer definierten Fehlertoleranz gleich hoch ist. Dabei können die Elektrolytflussraten EF3 und EF4 beispielsweise als Volumenstrom, Massenstrom oder Stoffmengenstrom eingestellt werden. Durch diese Maßnahme wird die Anodenseite und die Kathodenseite des Elektrolysezellenstapels gleichmäßig beschickt. Dadurch wird die mechanische Belastung der Elektrolysezellen, insbesondere der Trennelemente, reduziert. Ferner kann in den Elektrolysezellen entstehende Reaktionswärme besser abgeführt werden, da aufgrund der gleichen Elektrolytflussraten eine gleichmäßigere Wärmeübertragung erfolgt.

Eine Ausführungsform des erfindungsgemäßen Verfahrens ist dadurch gekennzeichnet, dass der Flüssigkeitsstand in jedem der Gas-Flüssigkeit-Abscheider so geregelt wird, dass dieser über die Zeit einen konstanten Wert annimmt.

Gemäß dieser Ausführungsform wird für jeden der Gas-Flüssigkeit-Abscheider ein Füllstand-Sollwert mit einer vordefinierten maximalen Abweichung eingestellt. Vorzugsweise wird der Füllstand in jedem der Abscheider so eingestellt, dass dieser möglichst gleich hoch ist. Dabei wird sich der Füllstand im kathodenseitigen und anodenseitigen Abscheider jedoch aufgrund des eingestellten Differenzdrucks $\Delta p$ und proportional zu diesem stets leicht unterscheiden.

Eine Ausführungsform des erfindungsgemäßen Verfahrens ist dadurch gekennzeichnet, dass der Differenzdruck $\Delta p$ in Abhängigkeit von der Auslastung des Elektrolyseurs eingestellt wird, insbesondere in Abhängigkeit von der an den Elektrolysezellenstapel angelegten Stromlast eingestellt wird.

Treibende Kraft bei jedem Elektrolyseprozess ist unter anderem das Wandern von Ionen zwischen dem Anoden- und Kathodenraum. Im Falle einer alkalischen Elektrolyse müssen Hydroxylionen (OH-) vom Kathodenraum durch das Trennelement hindurch in den Anodenraum wandern, damit die beiden Halbzellenreaktionen ablaufen können. Das Wandern der Ionen weist dabei einen diffusiven Anteil und, mit Erhöhung der Druckdifferenz zwischen Anoden- und Kathodenraum in vorteilhafter Weise, einen steigenden konvektiven Anteil auf. Bei niedriger Last, also kleineren Stromdichten, wird der Elektrolyseur vorzugsweise im Parallelstrombetrieb gefahren, da die Diffusion und/oder Konvektion von Wasserstoff auf die Sauerstoffseite (und umgekehrt) bei niedrigen Lasten besonders stark zum Tragen kommt. Entsprechend sollte in diesem Niederlastbetrieb $\Delta p$ nicht zu hoch eingestellt werden, um diesen unerwünschten Prozess aus sicherheitsrelevanten Aspekten nicht zu fördern.

Eine Ausführungsform des erfindungsgemäßen Verfahrens ist dadurch gekennzeichnet, dass der Elektrolyseur im Parallelstrommodus betrieben wird, wobei aus dem anodenseiten Gas-Flüssigkeit-Abscheider abgezogener Elektrolyt dem Anodenraum zugeführt wird, und aus dem kathodenseiten Gas-Flüssigkeit-Abscheider abgezogener Elektrolyt dem Kathodenraum zugeführt wird, und wobei über das Ausgleichsystem zumindest teilweise ein Konzentrationsausgleich zwischen der Elektrolytkonzentration im ersten Strömungsweg und der Elektrolytkonzentration im zweiten Strömungsweg bewirkt wird.

Unter Parallelstrommodus wird im Rahmen dieser Offenbarung verstanden, dass kein vollständiges Mischen, insbesondere nur ein in geringem Umfang anteiliges Mischen des anodenseitigen und des kathodenseitigen Elektrolyten erfolgt. Vorzugsweise findet dabei nur anodenseitig oder nur kathodenseitig ein Mischen statt, indem Anolyt auf die Kathodenseite strömt, oder umgekehrt Katholyt auf die Anodenseite strömt. Dadurch wird insbesondere entweder Anolyt oder Katholyt unverändert nach dem Abziehen aus dem Gas-Flüssigkeit-Abscheider der Anodenseite, respektive Kathodenseite des Elektrolysezellenstapels zugeführt. Das Ausgleichssystem bewirkt zumindest teilweise einen Konzentrationsausgleich zwischen der Elektrolytkonzentration im ersten Strömungsweg und der Elektrolytkonzentration im zweiten Strömungsweg, insbesondere bewirkt das Ausgleichssystem teilweise einen Konzentrationsausgleich zwischen der Elektrolytkonzentration im ersten Strömungsweg und der Elektrolytkonzentration im zweiten Strömungsweg.

Eine Ausführungsform des erfindungsgemäßen Verfahrens ist dadurch gekennzeichnet, dass der Elektrolyseur im Kreuzstrommodus betrieben wird, wobei der aus dem anodenseitigen Gas-Flüssigkeits-Abscheider abgezogene Elektrolyt und der aus dem kathodenseitigen Gas-Flüssigkeit-Abscheider abgezogene Elektrolyt vollständig gemischt werden, und anschließend der resultierende Elektrolytmischstrom in zwei Teilströme getrennt wird, und die Teilströme dem Kathodenraum und dem Anodenraum zugeführt werden.

Grundsätzlich findet durch diesen Kreuzstrombetrieb ein Konzentrationsausgleich zwischen dem Elektrolyten auf der Anodenseite und auf der Kathodenseite statt. Insbesondere findet dieser Konzentrationsausgleich vollständig durch das Mischen des Anolyten und Katholyten statt, so dass jeweils gleiche Konzentrationen an Elektrolyt auf der Anodenseite und auf der Kathodenseite vorherrschen. Aufgrund des Differenzdrucks $\Delta p$ zwischen dem Anodenraum und dem Kathodenraum ist die Permeationsflussrate PF ungleich null. Entsprechend ist zum Massenbilanzausgleich zwischen Anoden- und Kathodenseite regelmäßig eine von null verschiedene Ausgleichflussrate CF über das Ausgleichssystem erforderlich, so dass sich auch im Kreuzstrombetrieb die Nettoflussrate über das Ausgleichssystem regelmäßig von null unterscheiden wird.

Eine Ausführungsform des erfindungsgemäßen Verfahrens ist dadurch gekennzeichnet, dass das Ausgleichssystem

- einen dritten Strömungsweg umfasst, welcher den ersten Strömungsweg und den zweiten Strömungsweg fluidisch miteinander verbindet, wobei der dritte Strömungsweg stromabwärts zu denjenigen Positionen angeordnet ist, an welchen das Ermitteln der ersten Elektrolytflussrate EF1 innerhalb des ersten Strömungswegs und das Ermitteln der zweiten Elektrolytflussrate EF2 innerhalb des zweiten Strömungswegs erfolgt, und

- einen vierten Strömungsweg umfasst, welcher den ersten Strömungsweg und den zweiten Strömungsweg fluidisch miteinander verbindet, wobei der vierte Strömungsweg stromabwärts zum dritten Strömungsweg angeordnet ist und stromaufwärts zu denjenigen Positionen angeordnet ist, an welchen das Ermitteln der dritten Elektrolytflussrate EF3 innerhalb des ersten Strömungswegs und das Ermitteln der vierten Elektrolytflussrate EF4 innerhalb des zweiten Strömungswegs erfolgt.

Eine Anordnung gemäß der vorgenannten Ausführungsform erlaubt den Betrieb eines Elektrolyseurs mit einer einfachen Verschaltung der erforderlichen Leitungen sowohl im Parallelstrombetrieb als auch im Kreuzstrombetrieb. Dabei ist in beiden Betriebsarten eine Ausgleichsflussrate über den dritten und/oder vierten Strömungsweg realisierbar. Vorzugsweise ist der dritte Strömungsweg im Parallelstrombetrieb geschlossen und die Ausgleichsflussrate CF wird entlang des geöffneten vierten Strömungswegs realisiert. Vorzugsweise ist der dritte Strömungsweg im Kreuzstrombetrieb geöffnet und die Ausgleichflussrate CF wird entlang des ebenfalls geöffneten vierten Strömungsweg realisiert.

Dies wird vorzugsweise dadurch realisiert, dass innerhalb des dritten Strömungswegs ein erstes Ventil angeordnet ist, und innerhalb des vierten Strömungswegs ein zweites Ventil angeordnet ist, und innerhalb des ersten Strömungswegs oder innerhalb des zweiten Strömungswegs stromabwärts zum dritten Strömungsweg und stromaufwärts zum vierten Strömungsweg ein drittes Ventil angeordnet ist.

Bei den Ventilen kann es sich dabei insbesondere um Regelventile handeln, jedoch können je nach Anforderung auch einfache Schaltventile ausreichend sein, welche den jeweiligen Strömungsweg, beispielsweise den Querschnitt einer Leitung, entweder vollständig öffnen oder vollständig schließen.

Eine Ausführungsform des erfindungsgemäßen Verfahrens ist dadurch gekennzeichnet, dass innerhalb des ersten Strömungswegs eine erste Elektrolytumwälzpumpe angeordnet ist und innerhalb des zweiten Strömungswegs eine zweite Elektrolytumwälzpumpe angeordnet ist.

Diese Ausführungsform ist insbesondere für die obige Konfiguration mit drittem und viertem Strömungsweg bevorzugt.

Eine Ausführungsform des erfindungsgemäßen Verfahrens ist dadurch gekennzeichnet, dass das Ausgleichssystem dadurch gekennzeichnet ist, dass der erste Strömungsweg und der zweite Strömungsweg entlang eines Strömungswegabschnitts als gemeinsamer Strömungsweg ausgebildet sind, wobei der Strömungswegabschnitt stromabwärts zu denjenigen Positionen angeordnet ist, an welchen das Ermitteln der ersten Elektrolytflussrate EF1 innerhalb des ersten Strömungswegs und das Ermitteln der zweiten Elektrolytflussrate EF2 innerhalb des zweiten Strömungswegs erfolgt, und der Strömungswegabschnitt stromaufwärts zu denjenigen Positionen angeordnet ist, an welchen das Ermitteln der dritten Elektrolytflussrate EF3 innerhalb des ersten Strömungswegs und das Ermitteln der vierten Elektrolytflussrate EF4 innerhalb des zweiten Strömungswegs erfolgt.

Gemäß dieser Ausführungsform kann der Elektrolyseur ausschließlich im Kreuzstrombetrieb betrieben werden, da durch das Zusammenführen des ersten Strömungswegs und des zweiten Strömungswegs als gemeinsamer Strömungsweg entlang eines Strömungswegabschnitts, beispielsweise als einzelne Leitung entlang eines Strömungswegabschnitts, ein zwangsläufiges vollständiges Mischen des anodenseitigen und kathodenseitigen Elektrolyten erfolgt. Die Ausgleichsflussrate CF entspricht dann beispielsweise der Differenz zwischen der Flussrate im ersten Strömungsweg stromaufwärts des gemeinsamen Strömungswegs und der Flussrate im zweiten Strömungsweg stromaufwärts des gemeinsamen Strömungswegs, wenn die Flussraten im ersten und zweiten Strömungsweg stromabwärts des gemeinsamen Strömungswegs gleich sind.

Dabei ist bevorzugt, dass innerhalb des Strömungswegabschnitts eine Elektrolytumwälzpumpe angeordnet ist.

Gemäß dieser Konfiguration kann der Elektrolyseur mit nur einer einzigen Elektrolytumwälzpumpe betrieben werden.

Der Elektrolyseur wird beispielsweise bei einem Druck von 5 bis 40 bar (absolut) betrieben, vorzugsweise bei einem Druck von 10 bis 30 bar. Der Elektrolyseur wird ferner bei einer Temperatur von 40 °C bis 120 °C betrieben, vorzugsweise bei einer Temperatur von 50 °C bis 100 °C. Damit sind insbesondere die vorherrschenden Temperaturen am Ausgang des Elektrolysezellenstapels gemeint.

**Ausführungsbeispiele**

Die Erfindung wird im Folgenden durch Ausführungsbeispiele näher erläutert. In der folgenden detaillierten Beschreibung wird dabei auf die beigefügten Zeichnungen verwiesen, welche illustrativ spezifische Ausführungsformen der Erfindung darstellen. Die folgende detaillierte Beschreibung ist nicht in einem einschränkenden Sinne zu verstehen, und der Schutzumfang der Ausführungsformen wird durch die beigefügten Ansprüche definiert. Die Zeichnungen sind, soweit nicht anders angegeben, nicht maßstabsgetreu.

Es zeigt

Figur 1    eine schematische Darstellung einer ersten Ausführungsform einer Elektrolyseanordnung, welche zur Durchführung des erfindungsgemäßen Verfahrens im Parallelstrommodus konfiguriert ist,

Figur 2    eine schematische Darstellung der Elektrolyseanordnung gemäß Figur 1, welche zur Durchführung des erfindungsgemäßen Verfahrens im Kreuzstrommodus konfiguriert ist,

Figur 3    eine schematische Darstellung einer zweiten Ausführungsform einer Elektrolyseanordnung, welche zur Durchführung des erfindungsgemäßen Verfahrens konfiguriert ist.

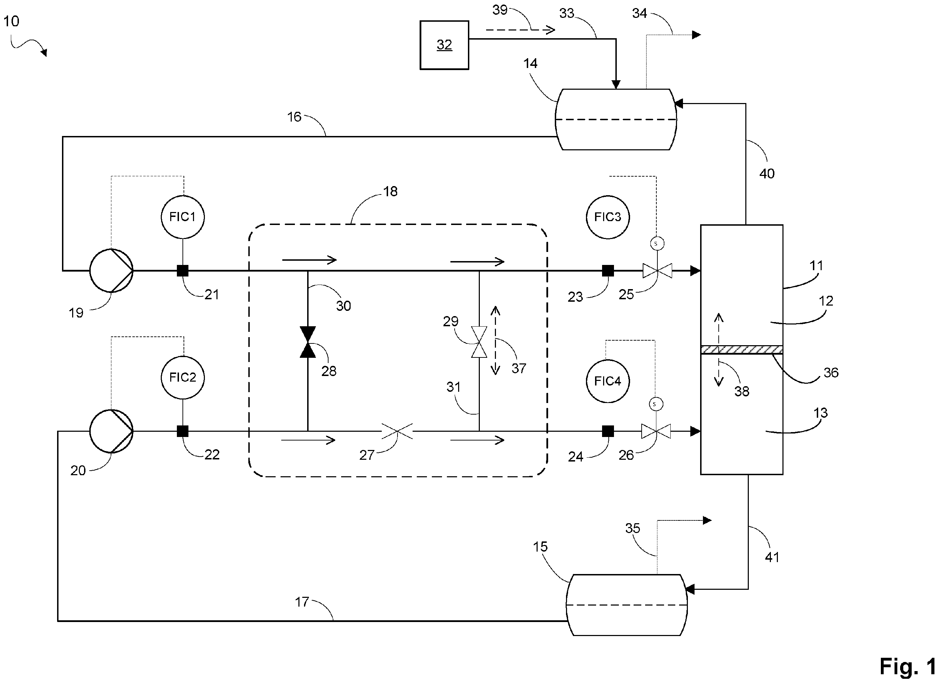

In den Figuren 1 bis 3 sind gleiche Elemente jeweils mit gleichen Bezugsziffern versehen.

Im Sinne der Erfindung wird unter einem "Elektrolyseur" eine Elektrolyseanordnung verstanden, welche im technischen Sinne nicht zwangsläufig ausschließlich den Elektrolyseur als solchen enthält. Vielmehr werden auch sogenannte *balance of stack* oder *balance of plant* Komponenten, wie beispielsweise ein Gas-Flüssigkeit-Abscheider oder Umwälzpumpen, als Teil des Elektrolyseurs betrachtet. Die technischen Begriffe "Elektrolyseur" und "Elektrolyseanordnung" werden daher im Sinne dieser Offenbarung als gleichwertig betrachtet.

In den Figuren 1 bis 3 sind Strömungsrichtungen der Elektrolyte durch nicht beschriftete Pfeile angezeigt.

Figur 1 zeigt eine schematische und stark vereinfachte Darstellung einer ersten Ausführungsform einer Elektrolyseanordnung 10, welche zur Durchführung des erfindungsgemäßen Verfahrens geeignet ist und für die Durchführung des Verfahrens im Parallelstrommodus gezeigt ist.

Die Elektrolyseanordnung gemäß Figur 1 weist einen Elektrolysezellenstapel 11 auf, welcher aus Gründen der Vereinfachung als einzelne Elektrolysezelle mit einem Anodenraum 12, einem Kathodenraum 13, und einem Trennelement 36 (Diaphragma) dargestellt ist. Die Elektrolyseanordnung ist zur Durchführung einer alkalischen Elektrolyse mit konzentrierter wässriger Kalilauge ($KOH_{aq}$) als Elektrolysemedium konfiguriert. Zur Ermöglichung der elektrochemischen Reaktion wird der Elektrolysezellenstapel 11 mit Gleichstrom (nicht gezeigt), vorzugsweise aus einer regenerierbaren Energiequelle, versorgt. Im Anodenraum wird durch Wasserelektrolyse Sauerstoff erzeugt, während im Kathodenraum Wasserstoff erzeugt wird. Das im Anodenraum entstehende zweiphasige Gemisch aus Elektrolysemedium und Sauerstoff wird über eine erste Verbindungsleitung 40 in einen anodenseitigen Gas-Flüssigkeit-Abscheider 14 geleitet. Im Gas-Flüssigkeit-Abscheider 14 findet eine Abtrennung des gasförmigen Anodenprodukts (Sauerstoff) statt, welches über eine Sauerstoff-Produktleitung 34 aus dem Verfahren ausgeleitet wird. Weitere Verfahrensschritte zur Aufarbeitung des Anodenprodukts (Trocknung, Entfernung von Restwasserstoff) sind nicht gezeigt.

Analog zum vorherigen wird im Kathodenraum 13 Wasserstoff erzeugt, und das entsprechende zweiphasige Gemisch aus Elektrolysemedium und Wasserstoff wird über eine zweite Verbindungsleitung 41 zu einem kathodenseitigen Gas-Flüssigkeit-Abscheider 15 geführt. Der abgetrennte Wasserstoff wird über eine Wasserstoff-Produktleitung 35 aus dem Verfahren ausgeschleust. Weitere Verfahrensschritte zur Aufarbeitung des Kathodenprodukts (Trocknung, Entfernung von Restsauerstoff) sind nicht gezeigt.

Das an Sauerstoff verarmte Elektrolysemedium, auch Anolyt, wird über einen ersten Strömungsweg 16, beispielsweise eine Leitung, zum Anodenraum 12 des Elektrolysezellenstapels 11 zurückgeführt. Das zweiphasige Gemisch in Leitung 40 und das an Sauerstoff verarmte Elektrolysemedium im ersten Strömungsweg 16 werden mit Hilfe einer Elektrolytumwälzpumpe 19 im Kreislauf geführt. Im Strömungsweg 16 wird ferner mit Hilfe eines Durchflussmessers 21 eine Elektrolytflussrate EF1 ermittelt. Der Durchflussmesser 21 steht mit einem Durchflussregler FIC1 in Wirkverbindung, welcher die Flussrate EF1 an dieser Stelle über die Elektrolytumwälzpumpe 19 regelt. Im ersten Strömungsweg 16 ist ein weiterer Durchflussmesser 23 zur Ermittlung einer Elektrolytflussrate EF3 angeordnet. Der Durchflussmesser 23 steht mit einem Durchflussregler FIC3 in Wirkverbindung, welcher die Elektrolytflussrate EF3 an dieser Stelle über ein Regelventil 25 regelt.

Das an Wasserstoff verarmte Elektrolysemedium, auch Katholyt, wird über einen zweiten Strömungsweg 17, beispielsweise eine Leitung, zum Kathodenraum 13 des Elektrolysezellenstapels 11 zurückgeführt. Das zweiphasige Gemisch in Leitung 41 und das an Wasserstoff verarmte Elektrolysemedium im zweiten Strömungsweg 17 werden mit Hilfe einer Elektrolytumwälzpumpe 20 im Kreislauf geführt. Im Strömungsweg 17 wird ferner mit Hilfe eines Durchflussmessers 22 eine Elektrolytflussrate EF2 ermittelt. Der Durchflussmesser 22 steht mit einem Durchflussregler FIC2 in Wirkverbindung, welcher die Elektrolytflussrate EF2 an dieser Stelle über die Elektrolytumwälzpumpe 20 regelt. Im zweiten Strömungsweg 17 ist weiterhin ein Durchflussmesser 24 zur Ermittlung einer Elektrolytflussrate EF4 angeordnet. Der Durchflussmesser 24 steht mit einem Durchflussregler FIC4 in Wirkverbindung, welcher die Elektrolytflussrate EF4 an dieser Stelle über ein Regelventil 26 regelt.

Über ein Druckregelsystem (nicht gezeigt) wird zwischen dem Anodenraum 12 und dem Kathodenraum 13 ein Differenzdruck Δp eingestellt, um den Transport von Hydroxylionen durch das Trennelement 36 (Diaphragma) als eine der treibenden Kräfte des Elektrolyseprozesses zu verbessern. Insbesondere aufgrund dieses Differenzdrucks Δp wird ein Permeationsfluss 38 mit einer Permeationsflussrate PF durch das Trennelement 36 bewirkt. Die Richtung dieses Permeationsflusses 38 hängt von den entsprechenden Druckverhältnissen ab. Wenn zum Beispiel der Absolutdruck im Anodenraum 12 höher ist als im Kathodenraum 13, dann fließt netto mehr Elektrolyt vom Anodenraum durch das Trennelement hindurch in den Kathodenraum, als umgekehrt.

Die Elektrolyseanordnung 10 verfügt weiterhin über ein Ausgleichssystem 18, welches stromabwärts zu den Durchflussmessern 21 und 22, sowie stromaufwärts zu den Durchflussmessern 23 und 24 angeordnet ist. Das Ausgleichssystem 18 weist einen dritten Strömungsweg 30, beispielsweise eine Leitung, auf. Der dritte Strömungsweg 30 stellt eine fluidische Verbindung zwischen dem ersten Strömungsweg 16 und dem zweiten Strömungsweg 17 her. Innerhalb des dritten Strömungswegs 30 ist ein Schaltventil 28 angeordnet, welches den Strömungsweg 30 entweder vollständig öffnen oder vollständig schließen kann. Im Falle der Elektrolyseanordnung 10 gemäß der Konfiguration nach Figur 1 ist das Schaltventil 28 geschlossen (angedeutet durch die schwarze Füllung). Stromabwärts zum dritten Strömungsweg 30 ist ein vierter Strömungsweg 31 angeordnet. Der vierte Strömungsweg 31 stellt eine fluidische Verbindung zwischen dem ersten Strömungsweg 16 und dem zweiten Strömungsweg 17 her. Dabei ist der vierte Strömungsweg 31 stromabwärts zum dritten Strömungsweg 30, sowie stromaufwärts zu den Durchflussmessern 23 und 24 und dem Elektrolysezellenstapel 11 angeordnet. Innerhalb des vierten Strömungswegs 31 ist ein Schaltventil 29 angeordnet, welches den vierten Strömungsweg 31 entweder vollständig öffnet oder vollständig schließt.

Bei geöffnetem Schaltventil 29 wird ein Durchfluss durch den vierten Strömungsweg 31 ermöglicht, welcher zumindest teilweise einen Konzentrationsausgleich in Bezug auf die Konzentration an KOH in den Elektrolyten im ersten Strömungsweg 16 und im zweiten Strömungsweg 17 ermöglicht. Die Elektrolyseanordnung 10 gemäß Figur 1 wird, wie hier gezeigt, im Parallelstrommodus betrieben. Da das Schaltventil 28 geschlossen ist, findet zunächst keine Mischung zwischen dem Anolyten im ersten Strömungsweg 16 und dem Katholyten im zweiten Strömungsweg 17 statt. Ist das Schaltventil 29 ebenfalls geschlossen, kann kein stofflicher Austausch zwischen dem ersten Strömungsweg 16 und dem zweiten Strömungsweg 17 stattfinden. In diesem Fall läge ein vollständiger Betrieb im Parallelstrommodus vor. Als Konsequenz würde sich die Konzentration an gelöster KOH im Anolyten stetig verringern (Bildung von Wasser auf der Anodenseite) und an gelöster KOH im Katholyten stetig erhöhen (Verbrauch von Wasser auf der Kathodenseite). Um dem entgegenzuwirken, kann ein Durchfluss durch den vierten Strömungsweg induziert werden, indem das Schaltventil 29 geöffnet wird. So kann zumindest ein teilweiser Konzentrationsausgleich zwischen der Anoden- und Kathodenseite erzielt werden. Um dies zu erreichen, können beispielsweise die Elektrolytflussraten EF1 an Durchflussmesser 21 und EF2 an Durchflussmesser 22 so geregelt werden, dass diese unterschiedlich hoch sind. Gleichzeitig können beispielsweise die Elektrolytflussraten EF3 an Durchflussmesser 23 und EF4 an Durchflussmesser 24 durch entsprechende Regelung gleich sein. Durch eine solche Regelung ergibt sich zwingend ein entsprechender Ausgleichsfluss 37 durch den vierten Strömungsweg 31 und dadurch ein entsprechender Konzentrationsausgleich. Die sich daraus ergebende Ausgleichsflussrate CF ergibt sich insofern aus den Elektrolytflussraten EF1 bis EF4. Der Durchfluss durch den vierten Strömungsweg 31 kann dabei vom ersten Strömungsweg 16 in Richtung des zweiten Strömungsweges 17 oder umgekehrt erfolgen, je nachdem, wie hoch der Betrag der Elektrolytflussraten EF1 bis EF4 ist. Sind beispielsweise die Elektrolytflussraten EF3 und EF4 gleich hoch, und die Elektrolytflussrate EF1 ist höher als die Elektrolytflussrate EF2, dann erfolgt der Ausgleichsfluss durch den vierten Strömungsweg 31 vom ersten Strömungsweg 16 in Richtung des zweiten Strömungswegs 17.

Zwischen dem dritten Strömungsweg 30 und dem vierten Strömungsweg 31 ist innerhalb des entsprechenden Abschnitts im zweiten Strömungsweg 17 ein Schaltventil 27 angeordnet. Wird die Elektrolyseanordnung 10 wie in Figur 1 im Parallelstrommodus betrieben, dann ist dieses Schaltventil geöffnet.

Die Elektrolyseanordnung verfügt weiterhin über einen Wassertank 32, über welchen der Elektrolyseanordnung 10 deionisiertes Wasser über eine Frischwasserzuführleitung 33 zugeführt werden kann. Dadurch die Elektrolysereaktion im Elektrolysezellenstapel 11 stetig Wasser verbraucht wird, muss dieses Wasser durch die Zuführung von deionisiertem Wasser kompensiert werden. Daraus ergibt sich ein Zufluss 39 mit einer entsprechenden Zuflussrate FF.

Dabei entspricht die Zuflussrate FF weitgehend der Menge an Wasser, welche im Anodenraum 11 im Rahmen der Anodenhalbzellenreaktion gebildet wird. Bei dieser Annahme wird davon ausgegangen, dass kein oder nur eine geringfügige Menge an Wasser mit den Produktgasen aus dem Elektrolysesystem ausgetragen wird. Dies ist normalerweise der Fall, wenn mit den Produktgasen ausgetragenes Wasser kondensiert und in das Prozesswassersystem der Elektrolyseanordnung 10 zurückgeführt wird. Die erforderliche Zuflussrate FF kann beispielsweise aus der an den Elektrolysezellen angelegten Stromdichte ermittelt werden, da eine Korrelation zwischen der Stromdichte und der Produktbildung und damit dem Wasserverbrauch besteht.

Im Rahmen der Erfindung wurde gefunden, dass die Permeationsflussrate PF ermittelt werden kann, wenn die Ausgleichflussrate CF und die Zuflussrate FF bekannt sind. Die Permeationsflussrate PF ergibt sich aus der Summe der Ausgleichsflussrate CF und der Menge (als Flussrate) an Wasser, welche an der Anode gebildet wird, entsprechend der obigen Annahmen somit der Zuflussrate FF. Somit ergibt sich die Permeationsflussrate PF als Summe aus der Ausgleichflussrate CF und der Zuflussrate FF.

Die folgenden tabellarisch zusammengefassten Zahlenbeispiele sollen die obigen Zusammenhänge nochmals verdeutlichen.

| Parallelstrommodus, wie in Figur 1 gezeigt | | | | | | | | |
|---|---|---|---|---|---|---|---|---|
| Beispiel Nr. | FF / (kg/h) | $\Delta$p / mbar (Anode zu Kathode) | EF1 / (kg/h) | EF2 / (kg/h) | EF3 / (kg/h) | EF4 / (kg/h) | CF / (kg/h) | PF / (kg/h) |
| 1 | 12 | 48 | 612 | 988 | 800 | 800 | 188 | 200 |
| 2 | 12 | 12 | 712 | 888 | 800 | 800 | 88 | 100 |
| 3 | 12 | -48 | 1012 | 588 | 800 | 800 | -212 | -200 |

In den Beispielen 1 bis 3 ist die Zuflussrate FF an Wasser mit 12 kg/h relativ niedrig. Grund ist, dass die Elektrolyseanordnung 10 unter Teillast betrieben wird. Dies ist immer dann der Fall, wenn Strom aus regenerierbaren Energiequellen nicht in vollem Umfang oder überhaupt nicht zur Verfügung steht, beispielsweise bei der Verwendung von Strom aus einer Windkraftanlage bei einer Windflaute. Zur Vermeidung der Bildung eines potentiell explosiven Gemisches im Teillastbetrieb wird die Elektrolyseanordnung 10 im Parallelstrommodus betrieben.

Die Elektrolytflussraten EF3 und EF4 sind jeweils gleich, um den Anodenraum 11 und den Kathodenraum 12 möglichst gleichmäßig zu beschicken. Der Ausgleichsstrom CF ergibt sich aus den ermittelten, und durch entsprechende Regelung eingestellten Elektrolytflussraten EF1 bis EF4. Dabei gilt

$$CF = EF3 - EF1,$$

sowie

$$CF = EF2 - EF4.$$

Die Permeationsflussrate PF kann aus der bekannten Zuflussrate FF und der ermittelten Ausgleichsflussrate durch die Beziehung

$$PF = CF + FF$$

ermittelt werden.

Die Tabelle zeigt, dass die Ausgleichsflussrate CF und die Permeationsflussrate PF erwartungsgemäß mit zunehmender Druckdifferenz $\Delta$p zwischen Anodenraum 11 und Kathodenraum 12 ansteigen.

Es gilt ferner die Beziehung

$$EF1 + EF2 = EF3 + EF4,$$

welche für Abweichungsprüfungen (*discrepancy check*) bei der Durchführung des Regelungsverfahrens genutzt werden kann. Beispielsweise bei einer Undichtigkeit oder einer Fehlfunktion eines Durchflussmessers wäre die obige Beziehung nicht mehr erfüllt.

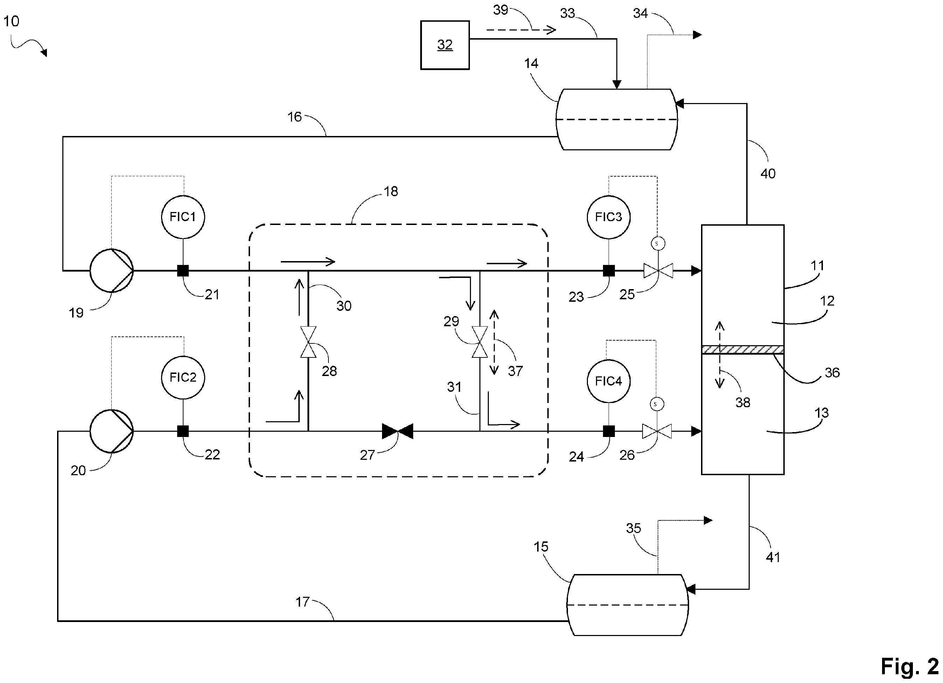

Figur 2 zeigt eine schematische und stark vereinfachte Darstellung einer Elektrolyseanordnung 10 gemäß der ersten Ausführungsform, jedoch hier für die Durchführung des erfindungsgemäßen Verfahrens im Kreuzstrombetrieb konfiguriert.

Bezüglich der Anordnung und Verschaltung der Komponenten unterscheidet sich die Darstellung gemäß Figur 2 nicht von der Darstellung der Figur 1. Gemäß der Konfiguration gemäß Figur 2 ist jedoch das Schaltventil 27 geschlossen und das Schaltventil 28 geöffnet. Dadurch, entsprechend der durch die Pfeile angezeigten Flussrichtungen, wird ein Mischen der Elektrolyten aus dem ersten Strömungsweg 16 und dem zweiten Strömungsweg 17 erzwungen. Entsprechend der durch die Regelventile 25 und 26 eingestellten und ermittelten Flussraten EF3 und EF4 teilt sich der Elektrolytstrom anschließend über den vierten Strömungsweg 31 (und anschließend den letzten Abschnitt des zweiten Strömungswegs 17), und den letzten Abschnitt des ersten Strömungswegs 16 auf den Anodenraum 11 und den Kathodenraum 12 auf.

Gemäß der Konfiguration nach Figur 2 im Kreuzstrombetrieb findet ein Konzentrationsausgleich zwischen dem Elektrolyten im ersten Strömungsweg 16 und im zweiten Strömungsweg 17 aufgrund der Mischung von Anolyten und Katholyten statt. Eine Ausgleichsflussrate CF kann aufgrund der oben dargelegten Zusammenhänge aus den Elektrolytflussraten EF1 bis EF4 bestimmt werden. Der Vorteil dieser Bestimmung liegt unter anderem darin, dass auf dieser Basis und der bekannten Zuflussrate FF auch für den Fall des Kreuzstrombetriebs die sonst unbekannte Permeationsflussrate PF bestimmt werden kann, aufgrund der Beziehung

$$PF = CF + FF.$$

Die folgenden tabellarisch zusammengefassten Zahlenbeispiele sollen die obigen Zusammenhänge nochmals verdeutlichen.

| Kreuzstrommodus, wie in Figur 2 gezeigt | | | | | | | | |
|---|---|---|---|---|---|---|---|---|
| Beispiel Nr. | FF / (kg/h) | $\Delta p$ / mbar (Anode zu Kathode) | EF1 / (kg/h) | EF2 / (kg/h) | EF3 / (kg/h) | EF4 / (kg/h) | CF / (kg/h) | PF / (kg/h) |
| 4 | 72 | 48 | 5072 | 5328 | 5200 | 5200 | 128 | 200 |
| 5 | 72 | -48 | 5472 | 4928 | 5200 | 5200 | -272 | -200 |

In den Beispielen 4 und 5 ist die Zuflussrate FF an Wasser mit 72 kg/h deutlich höher als in den Beispielen 1 bis 3 gemäß Figur 1. Grund ist, dass die Elektrolyseanordnung 10 in diesem Fall unter einer höheren Last oder Volllast betrieben wird. Insbesondere unter Volllast ist ein Mischen des Anolyt- und Katholytstrom möglich oder sogar erwünscht, da auf diese Weise Konzentrationsunterschiede im Elektrolysemedium zwischen der Anoden- und Kathodenseite von vorneherein vermieden werden.

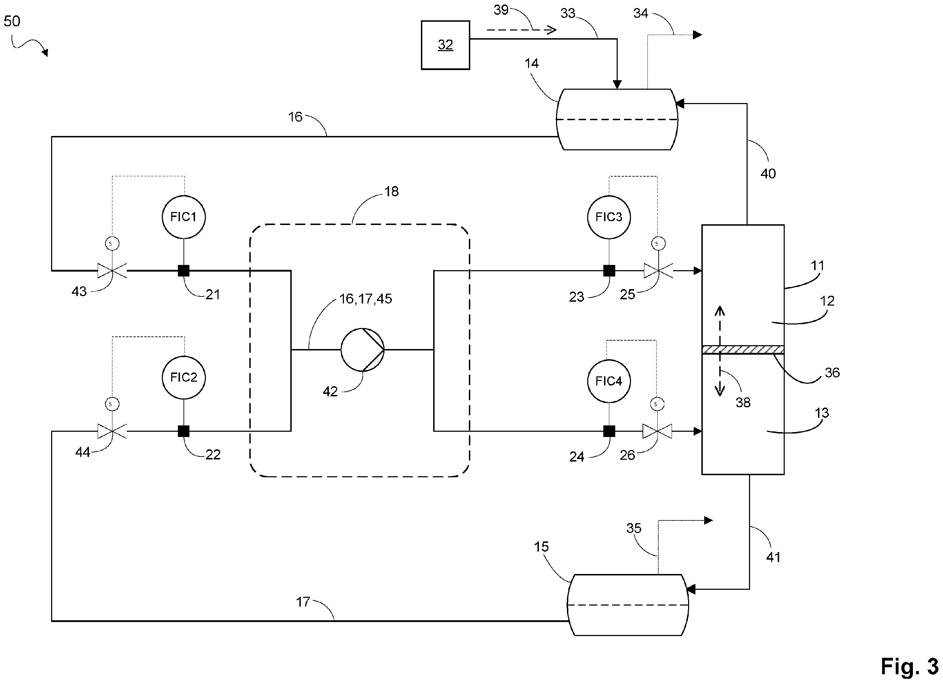

Figur 3 zeigt eine Elektrolyseanordnung 50, welche ausschließlich für den Kreuzstrombetrieb konfiguriert ist. Trotzdem kann das erfindungsgemäße Regelungsverfahren auch auf diesen Fall angewendet werden, da auf Basis der bestimmbaren Ausgleichsflussrate CF und der bekannten Zuflussrate FF wiederum die Permeationsflussrate PF des Permeationsflusses 38 bestimmt werden kann.

Gemäß der Konfiguration nach Figur 3 verfügt die Elektrolyseanordnung 50 nur über eine einzige Elektrolytumwälzpumpe 42. Der erste Strömungweg 16 und der zweite Strömungsweg 17 sind entlang eines Strömungswegabschnitts 45 als gemeinsamer Strömungsweg ausgestaltet, wobei innerhalb dieses Abschnitts die Elektrolytumwälzpumpe 42 angeordnet ist. Durch die Konfiguration mit gemeinsamem Strömungswegabschnitt 45 kann die Elektrolyseanordnung 50 ausschließlich im Kreuzstrommodus betrieben werden, wobei in diesem Fall zwangsläufig ein vollständiges Mischen des Anolyten und Katholyten erfolgt.

Zur Bestimmung der Elektrolytflussraten EF1, EF2, EF3 und EF4 sind vier Durchflussmesser 21, 22, 23 und 24 vorgesehen. Zur Regelung der Elektrolytdurchflüsse sind vier Regelventile 43, 44, 25 und 26 vorgesehen, welche in Wirkverbindung mit den jeweiligen Durchflussmessern stehen. Auf Basis der ermittelten Elektrolytflussraten EF1 bis EF4 kann eine von null verschiedene Ausgleichflussrate bestimmt werden, beispielsweise wenn sich die Werte von EF1 und EF3 und/oder von EF2 und EF4 voneinander unterscheiden. Auf Basis der Ausgleichsflussrate CF und der bekannten Zuflussrate FF des Zuflusses 39 lässt sich wiederum die Permeationsflussrate PF des Permeationsflusses 38 ermitteln.

**Bezugszeichenliste**

| | |
|---|---|
| 10, 50 | Elektrolyseanordnung |
| 11 | Elektrolysezellenstapel |
| 12 | Anodenraum |
| 13 | Kathodenraum |
| 14 | Anodenseitiger Gas-Flüssigkeit-Abscheider |
| 15 | Kathodenseitiger Gas-Flüssigkeit-Abscheider |
| 16 | Erster Strömungsweg |
| 17 | Zweiter Strömungsweg |
| 18 | Ausgleichssystem |

| 19, 20, 42 | Elektrolytumwälzpumpe |
|---|---|
| 21 | Durchflussmesser für Elektrolytflussrate EF1 |
| 22 | Durchflussmesser für Elektrolytflussrate EF2 |
| 23 | Durchflussmesser für Elektrolytflussrate EF3 |
| 24 | Durchflussmesser für Elektrolytflussrate EF4 |
| 25, 26, 43, 44 | Regelventil |
| 27, 28, 29 | Schaltventil |
| 30 | Dritter Strömungsweg |
| 31 | Vierter Strömungsweg |
| 32 | Wassertank |
| 33 | Frischwasserzuführleitung |
| 34 | Sauerstoff-Produktleitung |
| 35 | Wasserstoff-Produktleitung |
| 36 | Diaphragma (Trennelement) |
| 37 | Ausgleichsfluss |
| 38 | Permeationsfluss |
| 39 | Zufluss |
| 40 | Erste Verbindungsleitung |
| 41 | Zweite Verbindungsleitung |
| 45 | Strömungswegabschnitt |

**Patentansprüche**

1. Verfahren zur Regelung eines Elektrolyseurs, insbesondere eines alkalischen Elektrolyseurs (10, 50) für die Herstellung von Wasserstoff, wobei der Elektrolyseur mit einem Elektrolyten mit einer Elektrolytkonzentration betrieben wird, wobei

   der Elektrolyseur einen Elektrolysezellenstapel (11) mit einem Anodenraum (12) und einem Kathodenraum (13) umfasst, und
   einen anodenseitigen und einen kathodenseitigen Gas-Flüssigkeit-Abscheider (14, 15) umfasst, wobei
   der Anodenraum und der anodenseitige Gas-Flüssigkeit-Abscheider (14) über einen ersten Strömungsweg (16) fluidisch miteinander verbunden sind, und
   der Kathodenraum und der kathodenseitige Gas-Flüssigkeit-Abscheider (15) über einen zweiten Strömungsweg (17) fluidisch miteinander verbunden sind, und
   der Elektrolyseur stromabwärts der Gas-Flüssigkeit-Abscheider und stromaufwärts des Elektrolysezellenstapels ein Ausgleichssystem (18) aufweist, welches eine fluidische Verbindung zwischen dem ersten und dem zweiten Strömungsweg herstellt und so konfiguriert ist, dass ein zumindest teilweiser Konzentrationsausgleich zwischen einer Elektrolytkonzentration im ersten Strömungsweg und einer Elektrolytkonzentration im zweiten Strömungsweg erzielbar ist, und wobei das Verfahren die folgenden Verfahrensschritte aufweist:

   a) Einstellen eines Differenzdrucks $\Delta p$ zwischen dem Anodenraum und dem Kathodenraum;
   b) Ermitteln

   i. einer ersten Elektrolytflussrate EF1 innerhalb des ersten Strömungswegs und stromaufwärts des Ausgleichssystems,
   ii. einer zweiten Elektrolytflussrate EF2 innerhalb des zweiten Strömungswegs und stromaufwärts des Ausgleichssystems,
   iii. einer dritten Elektrolytflussrate EF3 innerhalb des ersten Strömungswegs und stromabwärts des Ausgleichssystems, und
   iv. einer vierten Elektrolytflussrate EF4 innerhalb des zweiten Strömungswegs und stromabwärts des Ausgleichssystems;

   c) Bestimmen einer Ausgleichsflussrate CF aus den vorgenannten Elektrolytflussraten, wobei die Ausgleichflussrate CF der Nettoflussrate über das Ausgleichssystem zwischen dem ersten Strömungsweg und dem zweiten Strömungsweg entspricht.

2. Verfahren nach Anspruch 1, wobei gilt

$$CF = EF3 - EF1,$$

sowie

$$CF = EF2 - EF4.$$

3. Verfahren nach Anspruch 1 oder 2, wobei das Verfahren die weiteren Verfahrensschritte aufweist:

d) Ermitteln einer Zuflussrate FF, wobei die Zuflussrate FF der Menge an dem Elektrolyseur zugeführten Wasser pro Zeiteinheit entspricht, welches durch eine Wasserstoff- und Sauerstoff-Bildungsreaktion pro Zeiteinheit verbraucht wird;
e) Bestimmen einer Permeationsflussrate PF aus der Zuflussrate FF und der Ausgleichflussrate CF, wobei die Permeationsflussrate PF der Flussrate durch alle zwischen dem Kathodenraum und dem Anodenraum angeordnete Trennelemente (36) entspricht.

4. Verfahren nach Anspruch 3, wobei gilt

$$PF = CF + FF.$$

5. Verfahren nach einem der vorherigen Ansprüche, **dadurch gekennzeichnet, dass** die dritte Elektrolytflussrate EF3 und die vierte Elektrolytflussrate EF4 eingestellt werden, so dass gilt

$$EF3 = EF4.$$

6. Verfahren nach einem der vorherigen Ansprüche, **dadurch gekennzeichnet, dass** der Flüssigkeitsstand in jedem der Gas-Flüssigkeit-Abscheider so geregelt wird, dass dieser über die Zeit einen konstanten Wert annimmt.

7. Verfahren nach einem der vorherigen Ansprüche, **dadurch gekennzeichnet, dass** der Differenzdruck $\Delta p$ in Abhängigkeit von der Auslastung des Elektrolyseurs eingestellt wird, insbesondere in Abhängigkeit von der an den Elektrolysezellenstapel angelegten Stromlast eingestellt wird.

8. Verfahren nach einem der vorherigen Ansprüche, **dadurch gekennzeichnet, dass** der Elektrolyseur im Parallelstrommodus betrieben wird, wobei aus dem anodenseiten Gas-Flüssigkeit-Abscheider abgezogener Elektrolyt dem Anodenraum zugeführt wird, und aus dem kathodenseiten Gas-Flüssigkeit-Abscheider abgezogener Elektrolyt dem Kathodenraum zugeführt wird, und wobei über das Ausgleichsystem zumindest teilweise ein Konzentrationsausgleich zwischen der Elektrolytkonzentration im ersten Strömungsweg und der Elektrolytkonzentration im zweiten Strömungsweg bewirkt wird.

9. Verfahren nach einem der Ansprüche 1 bis 7, **dadurch gekennzeichnet, dass** der Elektrolyseur im Kreuzstrommodus betrieben wird, wobei der aus dem anodenseitigen Gas-Flüssigkeits-Abscheider abgezogene Elektrolyt und der aus dem kathodenseitigen Gas-Flüssigkeit-Abscheider abgezogene Elektrolyt vollständig gemischt werden, und anschließend der resultierende Elektrolytmischstrom in zwei Teilströme getrennt wird, und die Teilströme dem Kathodenraum und dem Anodenraum zugeführt werden.

10. Verfahren nach einem der vorherigen Ansprüche, **dadurch gekennzeichnet, dass** das Ausgleichssystem

- einen dritten Strömungsweg (30) umfasst, welcher den ersten Strömungsweg und den zweiten Strömungsweg fluidisch miteinander verbindet, wobei der dritte Strömungsweg stromabwärts zu denjenigen Positionen angeordnet ist, an welchen das Ermitteln der ersten Elektrolytflussrate EF1 innerhalb des ersten Strömungswegs und das Ermitteln der zweiten Elektrolytflussrate EF2 innerhalb des zweiten Strömungswegs erfolgt, und
- einen vierten Strömungsweg (31) umfasst, welcher den ersten Strömungsweg und den zweiten Strömungsweg fluidisch miteinander verbindet, wobei der vierte Strömungsweg stromabwärts zum dritten Strömungsweg angeordnet ist und stromaufwärts zu denjenigen Positionen angeordnet ist, an welchen das Ermitteln der dritten Elektrolytflussrate EF3 innerhalb des ersten Strömungswegs und das Ermitteln der vierten Elektrolytflussrate EF4 innerhalb des zweiten Strömungswegs erfolgt.

11. Verfahren nach Anspruch 10, wobei innerhalb des dritten Strömungswegs ein erstes Ventil (28) angeordnet ist, und innerhalb des vierten Strömungswegs ein zweites Ventil (29) angeordnet ist, und innerhalb des ersten Strömungswegs oder innerhalb des zweiten Strömungswegs stromabwärts zum dritten Strömungsweg und stromaufwärts zum vierten Strömungsweg ein drittes Ventil (27) angeordnet ist.

12. Verfahren nach einem der vorherigen Ansprüche, **dadurch gekennzeichnet, dass** innerhalb des ersten Strömungswegs eine erste Elektrolytumwälzpumpe (19) angeordnet ist und innerhalb des zweiten Strömungswegs eine zweite Elektrolytumwälzpumpe (20) angeordnet ist.

13. Verfahren nach einem der Ansprüche 1 bis 7 oder 9, wobei das Ausgleichssystem **dadurch gekennzeichnet ist, dass** der erste Strömungsweg und der zweite Strömungsweg entlang eines Strömungswegabschnitts (45) als gemeinsamer Strömungsweg ausgebildet sind, wobei der Strömungswegabschnitt stromabwärts zu denjenigen Positionen angeordnet ist, an welchen das Ermitteln der ersten Elektrolytflussrate EF1 innerhalb des ersten Strömungswegs und das Ermitteln der zweiten Elektrolytflussrate EF2 innerhalb des zweiten Strömungswegs erfolgt, und der Strömungswegabschnitt stromaufwärts zu denjenigen Positionen angeordnet ist, an welchen das Ermitteln der dritten Elektrolytflussrate EF3 innerhalb des ersten Strömungswegs und das Ermitteln der vierten Elektrolytflussrate EF4 innerhalb des zweiten Strömungswegs erfolgt.

14. Verfahren nach Anspruch 13, **dadurch gekennzeichnet, dass** innerhalb des Strömungswegabschnitts eine Elektrolytumwälzpumpe (42) angeordnet ist.

Fig. 1

Fig. 2

EP 4 417 734 A1

Fig. 3

EP 4 417 734 A1

Europäisches
Patentamt

European
Patent Office

Office européen
des brevets

**EUROPÄISCHER RECHERCHENBERICHT**

**Nummer der Anmeldung**

**EP 23 15 6642**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 4 071 275 A1 (AIR LIQUIDE [FR]) 12. Oktober 2022 (2022-10-12) | 1,2,5-14 | INV. C25B1/04 |
| Y | * Absatz [0066] – Absatz [0079]; Ansprüche 1-15; Abbildungen 1-3 * <br> * Absätze [0041] – [0055] * <br> ----- | 1-14 | C25B9/19 <br> C25B15/029 <br> C25B15/08 |
| Y | US 2022/325423 A1 (TADIELLO JEAN-PHILIPPE [DE] ET AL) 13. Oktober 2022 (2022-10-13) <br> * Absatz [0065] – Absatz [0096]; Ansprüche 1-13; Abbildungen 1-3 * <br> ----- | 1-14 | |
| Y | EP 3 831 986 A1 (TOKUYAMA CORP [JP]) 9. Juni 2021 (2021-06-09) <br> * Absatz [0016] – Absatz [0031]; Abbildungen 1-9 * <br> * Absatz [0103] – Absatz [0127] * <br> ----- | 3,4 | |
| A | EP 3 604 617 A1 (ASAHI CHEMICAL IND [JP]) 5. Februar 2020 (2020-02-05) <br> * Ansprüche 1-34; Abbildung 1 * <br> ----- | 1-14 | |
| A | US 2017/335476 A1 (HANEBUTH MARC [DE] ET AL) 23. November 2017 (2017-11-23) <br> * Ansprüche 1-13; Abbildung 1 * <br> ----- | 1-14 | **RECHERCHIERTE SACHGEBIETE (IPC)** <br><br> C25B |

Der vorliegende Recherchenbericht wurde für alle Patentansprüche erstellt

| Recherchenort | Abschlußdatum der Recherche | Prüfer |
|---|---|---|
| München | 20. Oktober 2023 | Teppo, Kirsi-Marja |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
......................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 15 6642

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-10-2023

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| EP | 4071275 | A1 | 12-10-2022 | AU | 2022201771 | A1 | 27-10-2022 |
| | | | | CN | 115233249 | A | 25-10-2022 |
| | | | | EP | 4071275 | A1 | 12-10-2022 |
| | | | | US | 2022333260 | A1 | 20-10-2022 |
| US | 2022325423 | A1 | 13-10-2022 | AU | 2022201770 | A1 | 27-10-2022 |
| | | | | CN | 115198292 | A | 18-10-2022 |
| | | | | EP | 4071276 | A1 | 12-10-2022 |
| | | | | US | 2022325423 | A1 | 13-10-2022 |
| EP | 3831986 | A1 | 09-06-2021 | CA | 3107396 | A1 | 30-01-2020 |
| | | | | CN | 112534087 | A | 19-03-2021 |
| | | | | EP | 3831986 | A1 | 09-06-2021 |
| | | | | JP | 6826699 | B2 | 03-02-2021 |
| | | | | JP | WO2020022190 | A1 | 25-02-2021 |
| | | | | KR | 20210033952 | A | 29-03-2021 |
| | | | | PH | 12021550131 | A1 | 27-09-2021 |
| | | | | TW | 202010875 | A | 16-03-2020 |
| | | | | US | 2021262101 | A1 | 26-08-2021 |
| | | | | WO | 2020022190 | A1 | 30-01-2020 |
| EP | 3604617 | A1 | 05-02-2020 | EP | 3604617 | A1 | 05-02-2020 |
| | | | | JP | 6948384 | B2 | 13-10-2021 |
| | | | | JP | WO2018174281 | A1 | 07-11-2019 |
| | | | | WO | 2018174281 | A1 | 27-09-2018 |
| US | 2017335476 | A1 | 23-11-2017 | CA | 2974023 | A1 | 28-07-2016 |
| | | | | DK | 3209412 | T3 | 26-04-2021 |
| | | | | EP | 3045221 | A1 | 20-07-2016 |
| | | | | EP | 3209412 | A1 | 30-08-2017 |
| | | | | ES | 2866955 | T3 | 20-10-2021 |
| | | | | US | 2017335476 | A1 | 23-11-2017 |
| | | | | WO | 2016116211 | A1 | 28-07-2016 |

EPO FORM P0461

Für nähere Einzelheiten zu diesem Anhang : siehe Amtsblatt des Europäischen Patentamts, Nr.12/82